Europäisches Patentamt

European Patent Office

Office européen des brevets

(11) Numéro de publication: **0 275 749 B1**

# FASCICULE DE BREVET EUROPEEN

(45) Date de publication de fascicule du brevet:
23.10.91

(51) Int. Cl.5: **F16L 37/08**

(21) Numéro de dépôt: 87402847.5

(22) Date de dépôt: 15.12.87

(54) Raccord à fixation rapide.

(30) Priorité: 16.12.86 FR 8617775

(43) Date de publication de la demande:
27.07.88 Bulletin 88/30

(45) Mention de la délivrance du brevet:
23.10.91 Bulletin 91/43

(84) Etats contractants désignés:
DE GB IT

(56) Documents cités:
DE-U- 8 401 584
FR-A- 1 310 713
FR-A- 2 147 483
GB-A- 1 145 896
GB-A- 2 051 283

(73) Titulaire: **AUTOMOBILES PEUGEOT**
**75, avenue de la Grande Armée**
**F-75116 Paris(FR)**

Titulaire: **AUTOMOBILES CITROEN**
**62 Boulevard Victor-Hugo**
**F-92200 Neuilly-sur-Seine(FR)**

(72) Inventeur: **Bronner, Jean-Claude**
**21, rue Guttemberg**
**F-35000 Rennes(FR)**

(74) Mandataire: **Boivin, Claude**
**9, rue Edouard-Charton**
**F-78000 Versailles(FR)**

## Description

La présente invention concerne un raccord du genre de ceux qui servent à relier différents organes dans lesquels circule un fluide. Plus particulièrement le raccord qui fait l'objet de l'invention est utilisable dans des installations ou les différents organes sont reliés par des tuyaux en élastomère souples.

On sait que les raccords du type mentionné ci-dessus se composent en général d'une partie mâle le plus souvent solidaire de l'organe à raccorder dont elle forme l'embout et d'une partie femelle solidaire de l'extrémité du tuyau à raccorder, et qu'ils sont munis de moyens d'étanchéité et de verrouillage propres à résister à la pression du fluide (voir par ex. GB-A-2051283 et GB-A-1145896).

Dans le raccord qui fait l'objet de la présente invention la partie femelle est réalisée en matériau thermoplastique ou thermodurcissable chargé ou non et fixée par un surmoulage sur le tuyau lui-même en matériau thermoplastique, en élastomère ou en élastomère thermoplastique compatible ou adhérisable.

La partie femelle comporte un prolongement en forme de griffes de verrouillage propres à coopérer par clippage avec une collerette de l'embout et prolongées extérieurement par des leviers de déclippage tournés du côté opposé à l'embout.

Le raccord comporte, pour assurer l'étanchéité, un joint torique engagé dans une gorge et une lèvre ou un joint plat prenant appui sur un épaulement intérieur de la partie femelle et écrasé par l'extrémité de l'embout lorsque les griffes sont clippées sur la collerette en mettant ainsi en contrainte cette collerette sur les épaulements des griffes.

La partie femelle peut présenter une première jupe externe entourant le tuyau de telle sorte que le surmoulage pénètre entre le tuyau et la jupe et à l'extérieur de la jupe.

La partie femelle peut présenter une deuxième jupe interne au tuyau et munie d'un bossage annulaire externe de manière à serrer intérieurement le tuyau.

Le raccord peut comporter une partie femelle présentant un intérieur cylindrique au niveau du joint torique et conique au niveau des griffes de verrouillage en vis-à-vis avec des parties externes cylindrique et conique de l'embout.

On a décrit ci-après, à titre d'exemple non limitatif, divers modes de réalisation du raccord selon l'invention, avec référence aux dessins annexés dans lesquels:

La Figure 1 est une vue en coupe axiale d'un premier mode de réalisation ;

La Figure 2 est une vue en coupe d'un détail d'une variante;

La Figure 3 est une demi-coupe axiale d'un autre mode de réalisation;

La Figure 4 est une demi-coupe axiale montrant un détail d'un autre mode de réalisation.

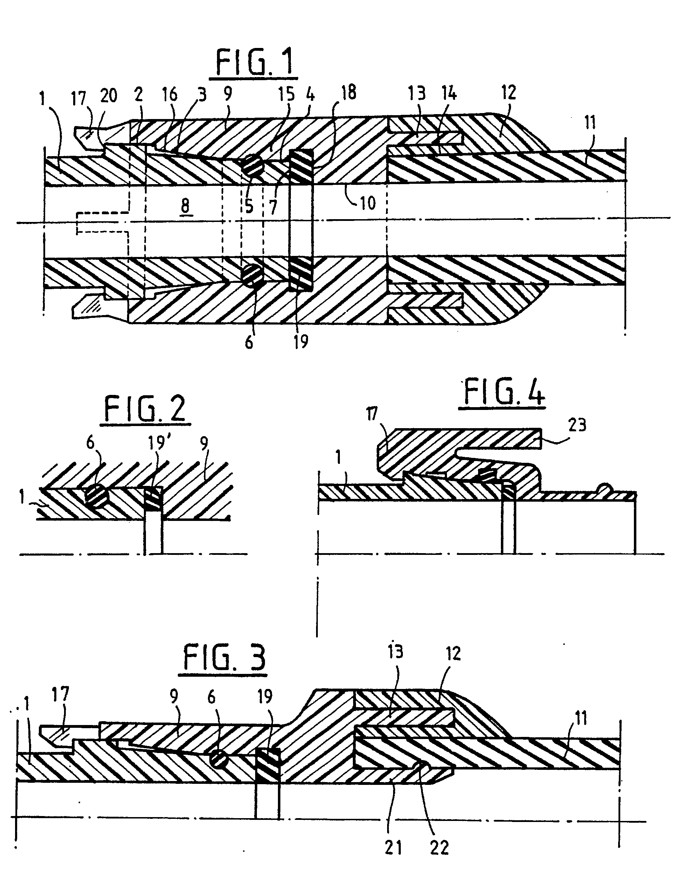

Tel qu'il est représenté à la Figure 1, le raccord selon l'invention comprend un embout 1 faisant corps avec l'organe à raccorder. Cet embout 1 est de préférence en matériau thermoplastique ou thermodurcissable mais pourrait être en aluminium, en cuivre un en un autre matériau. L'embout 1 comporte une collerette 2 venue de matière et un prolongement comprenant une partie externe conique 3 suivie d'une partie externe cylindrique 4 munie d'une gorge 5 dans laquelle est logé un joint torique 6. La face d'extrémité 7 de l'embout est plate. L'embout comporte un conduit axial 8 pour la circulation du fluide.

L'embout 1 peut s'engager de manière étanche dans un logement axial d'une partie femelle 9 qui comporte également un conduit axial 10 de même diamètre que le conduit axial 8 pour la circulation du fluide, de telle sorte qu'après montage les deux conduits axiaux 8 et 10 se succèdent sans discontinuité.

La partie femelle 9 est réalisée en matériau thermoplastique ou thermodurcissable chargé ou non, elle est fixée à un tuyau 11 en matière thermoplastique, en élastomère ou en élastomère thermoplastique compatible avec la partie femelle ou adhérisable. Un surmoulage 12 solidarise la partie femelle 9 et le tuyau 11.

La partie femelle 9 comporte une jupe externe 13 venue de matière et entourant le tuyau 11 de telle sorte que le surmoulage 12 puisse pénétrer dans l'intervalle 14 compris entre la jupe 13 et le tuyau 11.

La partie femelle 9 comporte du côté de l'embout 1 une partie cylindrique 15 écrasant le joint torique 6 et une partie conique 16 en vis-à-vis avec la partie conique 3 de l'embout ainsi qu'un ensemble de griffes 17 disposées périphériquement qui viennent se clipper sur la collerette 2 pour assurer le verrouillage.

La partie femelle 9 comporte un épaulement interne 18 sur lequel prend appui un joint plat 19 écrasé contre l'épaulement 18 par l'extrémité plate 7 de l'embout 1.

L'élasticité du joint plat 19 met en contrainte la collerette 2 de l'embout 1 sur des épaulements 20 des griffes 17.

On remarquera que le raccordement et le verrouillage résultent d'un déplacement axial unique, ce qui rend le montage facilement réalisable par un robot.

Dans la variante de la Figure 2, le joint plat 19 est remplacé par une lèvre 19′.

Dans la variante de la Figure 3, la partie femelle 9 comporte une deuxième jupe 21 disposée à l'intérieur du tuyau 11 et munie d'un bossage annulaire externe 22 de manière à serrer périphériquement le tuyau 11.

Dans la variante de la Figure 4, chaque griffe 17 comporte un prolongement en forme de levier 23 afin de faciliter le démontage du raccord.

**Revendications**

1. Raccord de fixation rapide comprenant un embout (1) solidaire d'un organe à raccorder et propre à coopérer avec une partie femelle (9) réalisée en matériau thermoplastique ou thermodurcissable, et solidaire par surmoulage de l'extrémité d'un tuyau (11) à raccorder lui-même en matériau thermoplastique ou en élastomère,
   ladite partie femelle (9) comportant un prolongement en forme de griffes de verrouillage (17) propres à coopérer par clippage avec une collerette (2) de l'embout (1) et prolongées extérieurement par des leviers de déclippage (23) tournés du côté opposé à l'embout,
   l'étanchéité étant assurée d'une part par un joint torique (6) engagé dans une gorge (5) de l'embout (1) et écrasé par la surface intérieure cylindrique de la partie femelle (9) et d'autre part par une lèvre (19') ou un joint plat (19) prenant appui sur un épaulement intérieur (18) de la partie femelle (9) et écrasé par l'extrémité de l'embout (1) lorsque les griffes (17) sont clippées sur la collerette (2) en mettant ainsi en contrainte cette collerette sur les épaulements (20) des griffes (17).

2. Raccord de fixation rapide selon la revendication 1,
   caractérisé en ce que la partie femelle (9) comporte une jupe externe (13) venue de matière, entourant le tuyau (11) de telle sorte que le surmoulage (12) pénètre entre le tuyau et la jupe et à l'extérieur de cette jupe.

3. Raccord de fixation rapide selon la revendication 2,
   caractérisé en ce que la partie femelle (9) présente une deuxième jupe (21) interne au tuyau (11) et munie d'un bossage annulaire externe (22) propre à serrer intérieurement le tuyau (11).

4. Raccord de fixation rapide selon la revendication 1,
   caractérisé en ce que la partie femelle (9) présente un intérieur cylindrique (15) au niveau du joint torique (6) et conique (16) au niveau des griffes de verrouillage (17) en vis-à-vis avec des parties externes cylindrique (4) et conique (3) de l'embout (1).

5. Raccord de fixation rapide selon l'une des revendications 1 à 4,
   caractérisé en ce qu'il comporte des moyens pour que le raccordement et le verrouillage résultent d'un déplacement axial unique.

**Claims**

1. Fast fixing connector including a joining piece (1) integral with a member to be connected and able to cooperate with a female portion (9) made of a thermoplastic or duroplastic material and integral via the duplicate moulding of the extremity of a pipe (11) to be connected, this pipe also being made of a thermoplastic material or of elastomer, said female portion (9) comprising a locking claw extension (17) whose claws are able to cooperate by clipping with a flange (2) of the joining piece (1) and extended externally by unclipping levers (23) orientated on the side opposite the joining piece, imperviousness being ensured firstly by an O-ring (6) engaged in a throat (5) of the joining piece (1) and crushed by the internal cylindrical surface of the female portion (9), and secondly by a lip (19') or a flat joint (19) taking support on an internal shoulder (18) of the female portion (9) and crushed by the extremity of the joining piece (1) when the claws (17) are clipped onto the flange (2), thus stressing this flange on the shoulders (20) of the claws (17).

2. Fast fixing connector according to claim 1, wherein the female portion (9) comprises an external skirt (13) made of a cast material surrounding the pipe (11) so that the casting moulding (12) penetrates between the skirt and the pipe and outside this skirt.

3. Fast fixing connector according to claim 2, wherein the female portion (9) has a second skirt (21) inside the pipe (11) and provided with an external annular boss (22) able to clamp the pipe (11) internally.

4. Fast fixing connector according to claim 1, wherein the female portion (9) has one interior (15) cylindrical at the level of the O-ring (6) and conical (16) at the level of the locking claws (17) opposite the cylindrical (4) and conical (3) external portions of the joining piece (1).

5. Fast fixing connector according to any one of claims 1 to 4, wherein it comprises means so that connection and locking result in a single axial movement.

**Patentansprüche**

1.  Schnellkupplung mit einem Einsteckteil (1), das mit einem Koppelorgan verbunden und zum Zusammenwirken mit einem Buchsenteil (9) geeignet ist, welches aus thermoplastischem oder duroplastischem Material besteht und durch Anformen mit dem Ende eines anzukoppelnden Rohres (11) aus thermoplastischem oder elastomerem Material fest verbunden ist, wobei das besagte Buchsenteil (9) eine Verlängerung in Form von Verriegelungsklauen (17) aufweist, die zum Zusammenwirken in einer Einklinkverbindung mit einem Kragen (2) des Einsteckteils (1) geeignet sind, und an der Außenseite durch Ausklinkhebel (23) verlängert sind, die in die vom Einsteckteil abgewandte Richtung ausgerichtet sind, und bei der die Dichtigkeit einerseits durch einen Rundring (6) sichergestellt ist, der in einer Nut (5) des Einsteckteils (1) angeordnet ist und durch die innere zylindrische Oberfläche des Buchsenteils (9) zusammengedrückt wird und andererseits durch eine Dichtungslippe (19') oder einen Flachring (19), die sich an einer inneren Schulter (18) des Buchsenteils (9) abstützen und vom Ende des Einsteckteils (1) zusammengedrückt werden, wenn die Klauen (17) in den Kragen (2) eingeklinkt sind und dadurch dieser Kragen durch die Schultern (20) der Klauen (17) unter Spannung gesetzt wird.

2.  Schnellkupplung nach Anspruch 1, dadurch gekennzeichnet, daß das Buchsenteil (9) eine an ihm einstückig angeformte äußere Schürze (13) aufweist, die das Rohr (11) derart umgibt, daß die Anformung (12) in den Bereich zwischen dem Rohr und der Schürze und den Außenbereich dieser Schürze eindringt.

3.  Schnellkupplung nach Anspruch 2, dadurch gekennzeichnet, daß das Buchsenteil (9) eine zweite Schürze (21) aufweist, die innerhalb des Rohres (11) angeordnet und mit einem ringförmigen äußeren Wulst (22) versehen ist, der geeignet ist, sich an die Innenseite des Rohres (11) anzupressen.

4.  Schnellkupplung nach Anspruch 1, dadurch gekennzeichnet, daß das Buchsenteil (9) auf der Höhe des Rundrings (6) eine zylindrische Innenseite (15) und auf der Höhe der Verriegelungsklauen (17) eine konische Innenseite (16) aufweist, die entsprechenden zylindrischen Außenabschnitten (4) und konischen Außenabschnitten (3) des Einsteckteils (1) gegenüberliegen.

5.  Schnellkupplung nach einem der Ansprüche 1 bis 4, dadurch gekennzeichnet, daß sie Mittel aufweist, aufgrund derer die Koppelung und Verriegelung nur durch axiale Verschiebung bewirkt werden.

## FIG. 1

## FIG. 2

## FIG. 4

## FIG. 3